# EUROPEAN PATENT SPECIFICATION

(11) **EP 0 382 520 B1**
(45) Date of publication and mention of the grant of the patent: **08.12.1993**
(21) Application number: 90301324.1
(22) Date of filing: 08.02.1990
(51) Int. Cl.: A47K 11/02, E03D 5/014, E03D 5/016

(54) **A flush toilet**
Spültoilette
WC à chasse d'eau

(30) Priority: 10.02.1989 JP 32493/89
(43) Date of publication of application: 16.08.1990
(73) Proprietor: Suzuki, Kaneyuki, Kitasaku-gun, Nagano-ken (JP)
(72) Inventor: Suzuki, Kaneyuki, Kitasaku-gun, Nagano-ken (JP)
(74) Representative: Armitage, Ian Michael

(56) References cited:
- DE-C- 47 788
- US-A- 3 474 468
- US-A- 3 673 614

## Description

The present invention relates to a flush toilet which can easily incinerate raw sewage.

There have been three major methods for dealing with raw sewage:
(1) impounding sewage in a sewage reservoir in each house, and periodically collecting it by means of a tank truck for conveyance to a sewage disposal facility;
(2) conveying raw sewage with water from each house to a sewage disposal facility via a sewer system; this method is especially adopted in urban areas.
(3) impounding raw sewage in a septic tank to purify raw sewage by microorganisms such as bacteria.

In the first method, a bad smell will be emitted, which may offend the neighbours, when raw sewage is collected from the reservoir. The tank truck is required to go periodically around houses so as to collect sewage at each house, so that a large amount of cost including labour cost and maintenance cost of the tank truck is required. Additionally, the presence of raw sewage in a reservoir leads to bad smells around the toilet.

In the second method, raw sewage can be conveyed to the sewage disposal facility with much water via the sewer system. Raw sewage conveyed is dealt with by various ways in the facility. For example, raw sewage is disintegrated by adding chemicals, heating, pressurizing or using bacteria. Supernatant water introduced into a settling poind is chlorinated, and then is discharged to a river. Sludge deposited in the pond is incinerated or is used for filling up land after dehydrating. The cost of this method is huge, and offensive smells are emitted in and around the facility. It is difficult to find suitable sites for such facilities.

And in the third method, raw sewage is fermented and disintegrated by bacteria but a large amount of water is required. Especially in cold areas, or in the cold season, bacterial activity is weakened so the amount of disintegration is reduced. Water purified is percolated in the ground through a filter but the filter gets clogged when water purification is imperfect. In a place where water percolation is unsatisfactory because of a base rock or a clay layer under the ground, water and raw sewage should be collected by the tank truck in order to convey them to the sewage disposal facility. Further, in the case of hotels in a tourist area or a health resort, amounts of raw sewage often exceeds the capacity of a septic tank when many tourists come, so that raw sewage half disintegrated runs over the tank.

DE-C-47788 discloses a flush toilet having a main drain pipe leading down to a storage volume. The pipe is closable by a shutter, downstream of a branch pipe through which flushing water can be extracted for purification.

US-A-3673614 discloses a sewage disposal system having a flush toilet connected via a pipe with a conventional S-bend to a settling tank whence the flush liquid is recycled, and sewage is passaged via a macerator and a system of valves to an incinerator.

According to the present invention there is provided a flush toilet, comprising:
an incinerating pot for incinerating sewage or the like arranged below a toilet stool;
conduit means connecting said incinerating pot and said toilet stool;
a branch pipe attached to said conduit means in order to separate flushing water from the sewage; and
vertically spaced first and second valve means in said conduit means below the branch pipe;
characterised in that said conduit means is a drain pipe which extends vertically, directly from the toilet stool to the incinerating pot, and said first and second valve means are respective upper and lower shutters for opening/closing the pipe at respective vertical locations; means being provided for actuating the shutters so that the flush toilet is switchable between:
(a) a 'use configuration' when the toilet is to be used, in which the upper shutter is open and the lower shutter is closed so that sewage falls onto the lower shutter
(b) a 'flush configuration' when the toilet is to be flushed, in which the upper shutter is closed and the lower shutter is open so that accumulated sewage and water from the space between the shutters falls into the incinerating pot, while most of the flushing water exits through the branch pipe above the upper shutter; a quantity of flushing water being retained in the pipe above the upper shutter and below the branch pipe; the retained water subsequently passing down the drain pipe and being retained by the lower shutter when the toilet is switched to the use configuration.

The flush toilet may include a filtering apparatus to which the branch pipe is connected; the toilet stool and a tank for impounding water filtered by the filtering apparatus being connected to each other by a return pipe.

The incinerating pot may have an inner center part which is formed lower. There may be a fan for agitating sewage, etc. in the incinerating pot; and means for sucking ash whose lower end is arranged in the incinerating pot.

The flush toilet may further comprise means for introducing garbage, etc. besides sewage into the incinerating pot, whereby garbage, etc. can be incinerated with or without sewage.

The flush toilet of the present invention with above stated structure has following advantages.

Raw sewage, etc. can be easily directed to the incinerating pot because the incinerating pot is arranged under the toilet stool.

Raw sewage, etc. and flush water can be dealt separately because the shutter or shutters are provided in the midway of the drain pipe and the branch pipe is arranged above the shutter or shutters.

During evacuation or urination, the first shutter opens, and after evacuation or urination, the first shutter closes and then the second shutter opens to direct raw sewage onto the incinerating pot. Additionally, flushing water can be flushed only the case that the first shutter is closed. Therefore, even though the first shutter opens during incineration, the second shutter prevents emitting heat and/or bad smell.

And water flushed may be filtered, so that the water filtered can be reused as flushing water. This is effective and economical.

Further, kitchen garbage, etc. also can be incinerated with or without sewage.

The present invention will be apparent from the following description, reference being had to accompanying drawings wherein preferred embodiments of the present invention are clearly shown.

In the drawings:
Fig. 1 shows a partially sectional schematic view of a flush toilet of the embodiment;
Fig. 2 shows a plan view of an incinerating pot;
Figs. 3 and 4 show plan views of part of filtering apparatus;
Fig. 5 shows a partial perspective view of the filtering apparatus;
Fig. 6 shows a perspective view of the filtering apparatus;
Fig. 7 shows a plan view of one of supporting frame and a shutter;
Fig. 8 shows a longitudinal sectional view of a shutter mechanism;
Fig. 9 shows a transverse sectional view of the shutter mechanism;
Fig. 10 shows an explanation view of the flush toilet without a flush tank;
Fig. 11 shows a plan view indicating layout of two shutters;
Fig. 12 shows a partial perspective view of another example of a drive shaft;
Fig. 13 shows a sectional view of the shutter mechanism;
Fig. 14 shows a side view of a clipping plate;
Fig. 15 shows a partial sectional view of a deodorizing section of a smokestack;
Fig. 16 shows a front schematic view of another embodiment; and
Fig. 17 shows a plan schematic view thereof.

Preferred embodiments of the present invention will now be described in detail with reference to accompanying drawings.

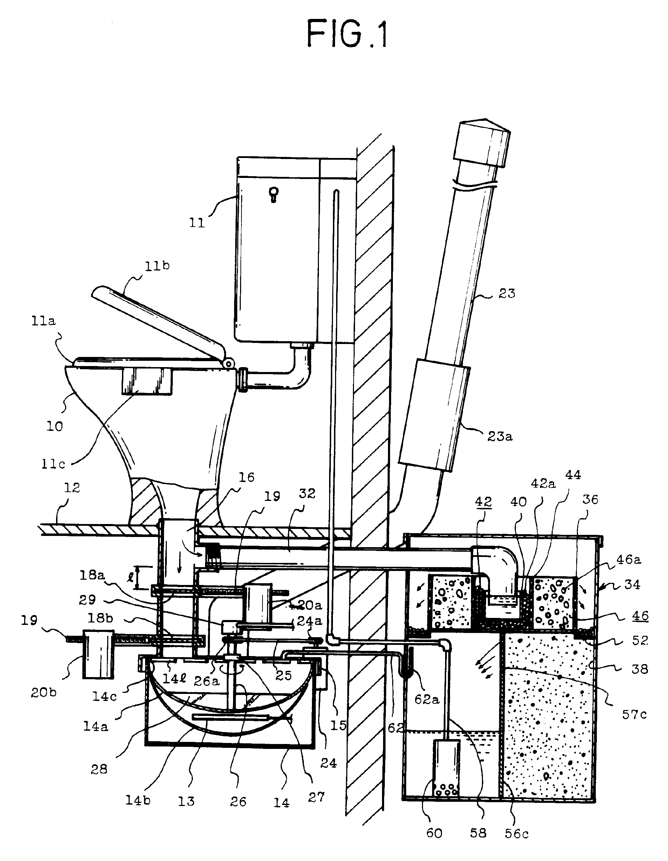

Fig. 1 shows a schematic view of the flush toilet of the present invention.

A toilet stool 10 has a seat section 11a and a cover section 11b. The toilet stool 10 is set on a floor 12. There is provided an incinerating pot 14 under the floor 12 on which the toilet stool 12 is set. The incinerating pot 14 and the toilet stool 12 is connected by a vertical drain pipe 16. There is provided a flush tank 11 on the inner wall face of the toilet, and the flush tank 11 is connected to the toilet stool 10.

There are provided two shutters for closing the drain pipe 16 at the midway of the drain pipe 16. One of shutters, which is nearer the incinerating pot 14 than the other, is the second shutter 18b; the other shutter is the first shutter 18a. The first and second shutters 18a and 18b are respectively able to open and close the drain pipe 16 by actuators 20a and 20b. If the seat section 11a or the cover section 11b is lifted, the actuator 20a is driven by known electrical means to open the first shutter 18a, so that the drain pipe 16 lets through. There is provided a control section on the toilet stool 10. After evacuation or urination, the control section 11c is operated, so that the first shutter 18a is closed and then the second shutter 18b is opened by another known electrical means.

Next, the incinerating pot will be explained.

There is provided an electric heater 13 immediately below the bottom face of the hemispherical pot proper 14a. The electric heater 13 is covered with a hemispherical reflector 14b so as to reflect heat from the electric heater 13 toward the pot proper 14a. The opening of the pot proper 14a is covered with a lid 15. There are formed projections 14c on the fringe of the opening of the pot proper 14a to support the lid 15, so that clearance 14ℓ is formed between the fringe of the opening of the pot proper 14a and the lid 15. Air can be introduced into the pot proper 14a via the clearance 14ℓ.

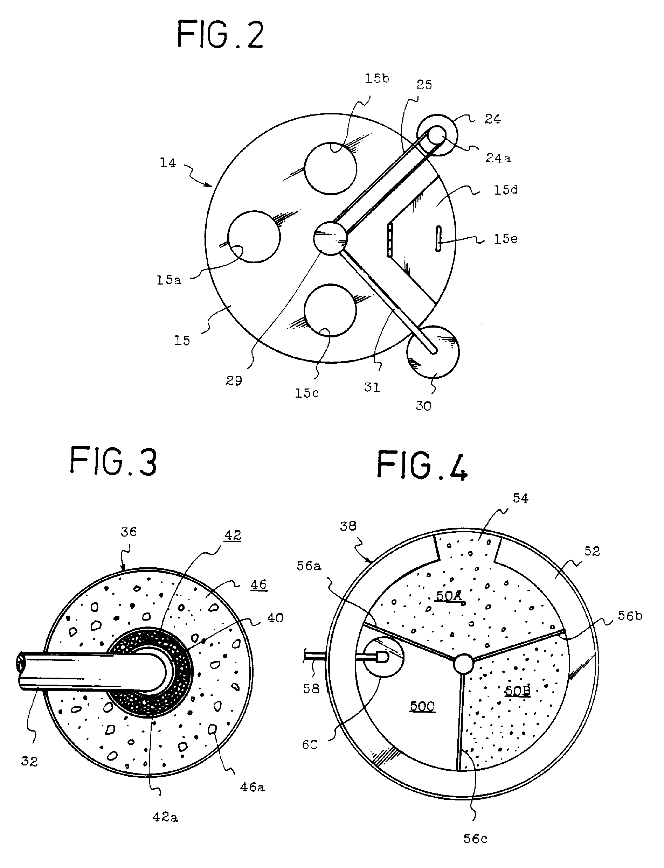

Fig. 2 shows a plan view of the incinerating pot 14.

The lid 15 of the incinerating pot 14 has three openings. The first opening 15a is connected to the drain pipe 16. The second opening 15b is connected to a smokestack 23. And the third opening 15c may be connected to a pipe through which garbage can be introduced into the pot proper 14a. Further, the lid 15 has a check hole 15d, and can be opened or closed by hand with gripping a handle 15e. There is provided a bearing 27 for rotatably holding a drive shaft 26 in the center of the lid 15. A pulley 26a is fixed at the upper section of the drive shaft 26 which is projected upward from the lid 15. The pully 26a is connected to a pulley 24a, which is fixed at a shaft of a motor 24 adjacent to the incinerating pot 14, by a belt 25. At the lower end of the drive shaft 26 is a fan 28. The fan 28 agitates raw sewage in the incinerating pot 14 for efficient incineration, so the fan 28 is formed along the inner face of the incinerating pot 14. The drive shaft 26 is cylindrical and its lower end is opened. While, a joint 29 is fixed at the top end of the drive shaft 26. The joint 29 does not rotate with the rotation of the drive shaft 26. The joint 29 and a sucking apparatus 30 are connected each other by a pipe 31, so that ash in the incinerating pot 14 is drew into the sucking apparatus 30 via the drive shaft 26, the joint 29 and the pipe 31. Namely, the drive shaft 26 serves as not only a drive shaft but also a sucking pipe. Therefore, ash of sewage burnt in the incinerating pot 14 is collected by the fan 28 and sucked to the sucking apparatus 30 from the lower end of the drive shaft 26.

The smokestack 23, whose lower end is connected to the second opening 15b of the lid 15, is extended to outside of the house. There is provided a deodorizing section 23a at the midway of the smokestack 23. The deodorizing section 23a has deodorizer (not shown) in order to eliminate bad smell in smoke.

At the position immediately above the first shutter 18a, a branch pipe 32 is connected to the drain pipe 16. The front end of the branch pipe 32 is connected to a filtering apparatus 34. The filtering apparatus 34 has a first filtering tank 36 for filtering water from the branch pipe 32 and a second filtering tank 38 accommodated in the first filtering tank 36.

The first and second filtering tanks 36 and 38 will be explained with reference to Figs. 1, 3 and 4. Note, Figs. 3 and 4 are plan views of part of the filtering apparatus.

The first filtering tank 36 is formed like shallow cylindrical shape and has multiple through-holes in the wall. There is provided a cup-like receiving section 40 at the center of the first filtering tank 36. The front end of the branch pipe 32 reaches to the raceiving section 40. The receiving section 40 is supported by deodorizers 42a. The deodorizers 42a are accommodated in a deodorizer chamber 42 which is divided by a cylindrical parting member 44 having multiple through-holes. In a donut-like filtering chamber 46 formed by the parting member 44 and the inner wall face of the first filtering tank 36, filtering materials 46a such as charcoal, sand, etc. are accommodated therein. Water introduced by the branch pipe 32 is impounded in the receiving section 40 and overflows. Then the water flows into the deodorizer chamber 42 and the filtering chamber 46 via the through-holes of the parting member 44. The water, which has been filtered by the filtering materials 46a in the filtering chamber 46, flows out from the wall of the first filtering tank 36.

The diameter of the second filtering tank 38 is larger than the diameter of the first filteing tank 36, so that the first filtering tank 36 is accommodated in the second filtering tank 38. The first filtering tank 36 is supported by a first parting plate 52, which connects the outer fringe section of the bottom face of the first filtering tank 36 and the inner wall face of the second filtering tank 38. A part of the first parting plate 52 is opened as an exit 54. The first parting plate 52 is inclined in order that the position of the exit 54 should be low. Deodorizers are on the first parting plate 52.

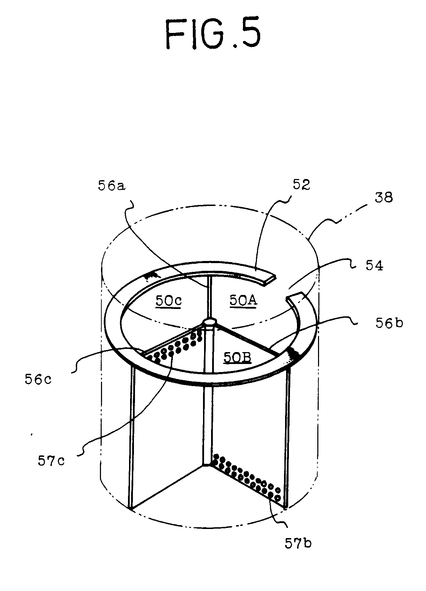

The second filtering tank 38 is divided into three chambers by radially arranged second parting plates 56a, 56b and 56c. A first filtering chamber 50A, which is formed by the second parting plates 56a and 56b, is connected to the exit 54. A second filtering chamber 50B, which is formed by the second filtering plates 56b and 56c, is formed adjacent to and clockwise direction side of the first filtering chamber 50A. Floats tones, sand, charcoals, etc. are accommodated in the first filtering chamber 50A; sand, charcoals, etc. are accommodated in the second filtering chamber 50B. The chamber formed by the second parting plates 56b and 56c is a tank 50c for impounding water filtered. The first filtering chamber 50A and the second filtering chamber 50B are connected by multiple through-holes 57b..., which are bored in the lower section of the second parting plate 56b. With this structure, water introduced in the first filtering chamber 50A via the exit 54 is filtered in the first filtering chamber 50A and flows into the second filtering chamber 50B via the through-holes 57b... of the second parting plate 56b. There are bored multiple through-holes 57c... in the upper section of the second parting plate 56c. Upon reaching the water level in the second filtering chamber 50B to the through-holes 57c... of the second parting plate 56c then the water flows into the tank 50c to impound therein (see Fig. 5). Note that, Fig. 5 shows the arrangement of the second parting plates 56a, 56b and 56c of the second filtering tank 38 and the first parting plate 52.

The tank 50c and the flash tank 11 are connected each other by a return pipe 58. The front end of the return pipe 58 is connected to a pump 60, which is provided in the tank 50c. When the amount of water in the flush tank 11 is reduced, the pump 60 introduces the water filtered into the flush tank 11.

There is provided an overflow-pipe 62 in the tank 50c. The front end of the overflow-pipe 62 is formed U-shape as a trap 62a. The rear end of the overflow-pipe 62 is connected to the incinerating pot 14 for introducing water overflowed into the incinerating pot 14.

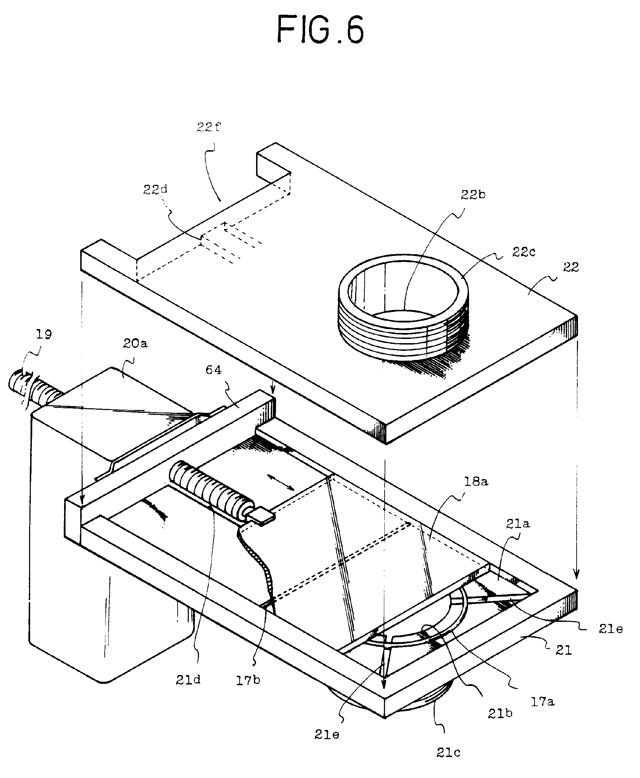

Next, the shutters will be explained in detail. Note that, both of the shutters have same structure, so one shutter will be explained with reference to Figs. 6-9, mainly Fig. 6.

The first shutter 18a is clipped by clipping plates 21 and 22. The lower clipping plate 21 has a cavity 21a having walls on three sides; one side is opened. There is bored a hole 21b in the bottom of the cavity 21a. A connecting pipe 21c is connected to the hole 21b and extended downward. The first shutter 18a in the cavity 21a can be slided toward the open side of the cavity 21a. The open side of the cavity 21a of the clipping plate 21 is fixed to a fixed member 64. An actuator 20a is fixed outside of the fixed member 64. A screw rod 19 is pierced through the fixed member 64 and the actuator 20a, and the first shutter 18a is rotatably attached to the front end of the screw rod 19. There is a groove 21d in the carvity 21a of the clipping plate 21, which is moved back and forth by the screw rod 19.

A gear engaging with a motor for driving the screw rod 19 is accommodated in the actuator 20a. Namely, the first shutter 18a can be moved back and forth depending on the rotational direction of the screw rod 19 to open and to close the drain pipe 16.

A sealing member 17a is fixed in a groove, which is coaxially grooved to the hole 21b in the cavity 21a. Another sealing member 17b, whose length is the same as the width of the carvity 21a, is fixed to the open side of the cavity 21a. A groove 21e is grooved from the corner of the cavity 21a to the hole 21b. The groove 21e and the hole 21b is connected each other.

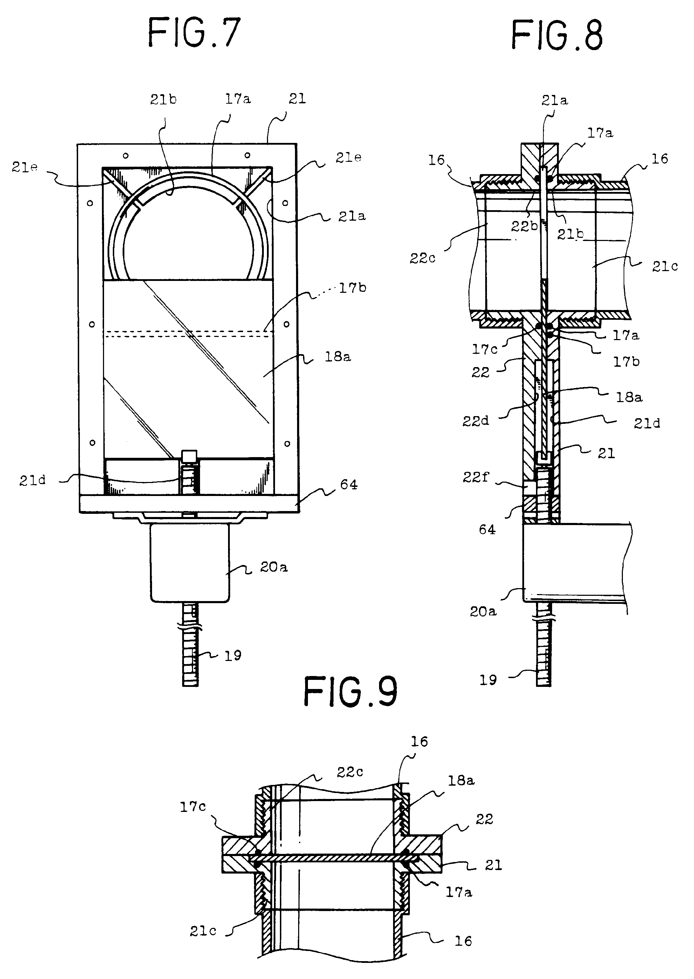

The clipping plate 22 covering over the cavity 21a of the clipping plate 21 is fixed on the upper face of the clipping plate 21 by screw, etc. While, the clipping plate 22 has a hole 22b, which is bored at the position corresponding to the hole 21b of the clipping plate 21. A connecting pipe 22c is connected to the hole 22b and extended upward. A sealing member 17c is coaxially fixed to the hole 22b (see Figs. 8 and 9). The clipping plate 22 is piled on the clipping plate 21 to form a slidable mechanism of the first shutter 18a. Note that, a groove 22d is grooved on the bottom face of the clipping plate 22. The screw rod 19 can be moved in the groove 22d. An opening 22f is opened at the fixed member 64 side of the clipping plate 22. The drain pipe 16 is connected to connecting sections 21c and 22c of the clipping plates 21 and 22 (see Figs. 8 and 9).

Water on the first shutter 18a is normally prevented from leaking outside of the sealing member. Even though water leaks outside thereof, the water is introduced to the hole 21b via the groove 21e.

Successively, the action of the flush toilet of above described embodiment will be explained in order.
① Lifting the seat section 11a or the cover section 11b, the first shutter 18a opens. Note, the second shutter 18b has still closed the drain pipe 16.
② Evacuating or urinating.
③ Closing the first shutter 18a and opening the second shutter 18b by operating the control section 11c, then raw sewage falls into the incinerating pot 14. Note that, flushing water or water washing for the anal region of user can be flowed when only the first shutter 18a closes the drain pipe 16, so that unnecessary water cannot flow when the first shutter opens.
④ Upon passing prescribed time, the second shutter 18b automatically closes.
⑤ After the first shutter 18a closes the drain pipe 16, water can be flushed. Flushing water falls through the drain pipe 16 and is introduced to the filtering apparatus 34 by the first shutter 18a and the branch pipe 32. Further, if necessary, water for washing the anal region of user is also introduced thereto with the flushing water. Note that, the branch pipe 32 and the first shutter 18a are not set at same level, so water will be impounded in the part ℓ. This water impounded will prevent raw sewage from sticking on the second shutter 18b because the first shutter 18a will open before using the toilet so the water impounded will fall on the second shutter 18b.
⑥ The water introduced through the branch pipe 32 is impounded in the receiving section 40 and overflows from the opening of the receiving section 40 to the deodorizer chamber 42, then flows into the filtering chamber 46 via the parting member 44. The water filtered in the filtering chamber 46 flows out from the wall of the first filtering tank 36, and the water flows into the first filtering chamber 50A via the parting member 52 and the exit 54 to filter therein. The water filtered in the first filtering chamber 50A flows into the second filtering chamber 50B via the multiple through-holes 57b... of the second parting plate 56b. Upon reaching the water level in the second filtering chamber 50B to the multiple through-hole 57c... of the second parting plate 56c, then the water flows into the tank 50c.
⑦ When water in the flush tank 11 is flushed, the water in the tank 50c is introduced back to the flush tank 11 via the return pipe 58 by the pump 60. Note that, if the water level in the flush tank 11 is lower than prescribed level, water from the water supply system will be added.
⑧ When water in the tank 50c over flows, the water will be introduced to the incinerating pot 14 via the overflow-pipe 62.
⑨ Raw sewage in the incinerating pot 14 is incinerated by the electric heater 15 for heating the incinerating pot 14. The heat from the electric heater 15 can be efficienly emitted to the pot proper 14a by the reflector 14b. In this incineration, the fan 28 agitates raw sewage for efficient incineration. Note that, air can be introduced into the incinerating pot 14 via the clearance 14ℓ between the fringe section of the opening of the pot proper 14a and the lid 15. Additionally, heated air with bad smell, etc. are introduced outside via the smokestack 23. In the smokestack 23, the air can be deodorized in the deodorizing section 23a.
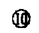 After incinerating sewage, the electric heater 15 is turned off. Control of the electric heater 15 may be executed by known electrical means. Further, the fan 28 rotates to collect ash to the center lower section of the incinerating pot 14, and then the sucking apparatus 30 sucks the ash via the pipe-like drive shaft 26. Note that, in case of using the toilet during incinerating sewage, the action ① ∼ ⑦ may be executed. Even though the first shutter 18a opens during the incineration, the lower second shutter 18b still closes so no heat air or no bad smell climbs up in the toilet.

Next, another embodiment will be descirbed.

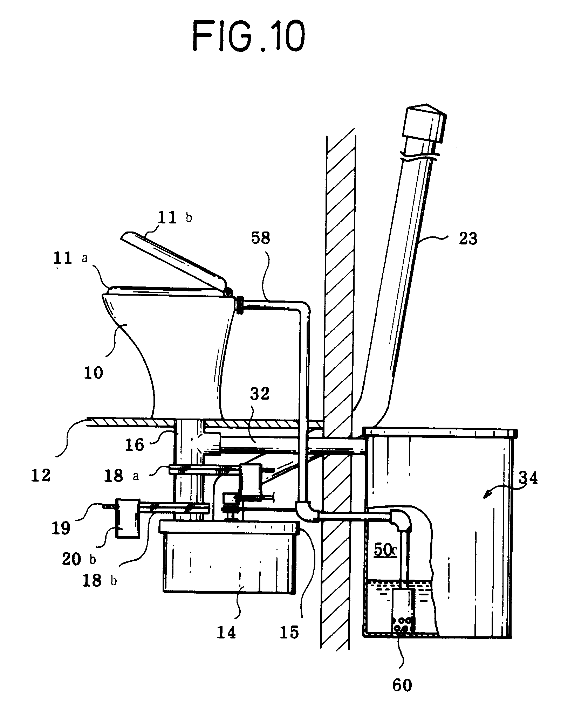

Fig. 10 shows another embodiment without the flush tank 11 of the former embodiment. In this embodiment, the return pipe 58, which is extended from the tank 50c of the filtering apparatus 34 is directly connected to the toilet stool 10 in order to return the water for flushing toilet stool 10. With this structure, flushing water is introduced back by pump 60 when the toilet stool 10 is flushed. This embodiment has an advantage that necessary area in the toilet can be smaller. Note that, water for washing user's anal region should be supplied from the water supply system, and if water in the tank 50c is reduced, water should be supplied by proper means such as water supply system.

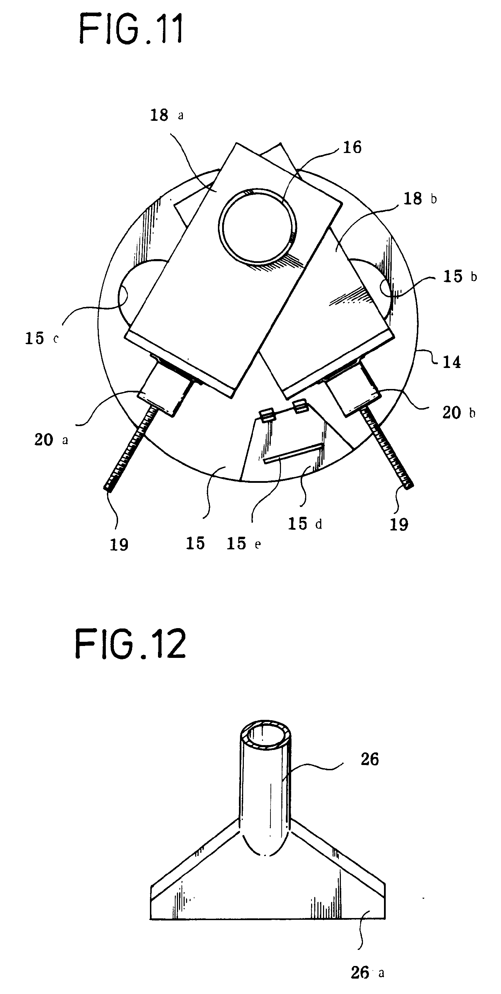

In Fig. 1, the first shutter 18a and the second shutter 18b are arranged to face each other but both shutters 18a and 18b and both actuators 20a and 20b may be arranged above the incinerating pot 14 as shown in Fig. 11 then the necessary space can be reduced.

In Fig. 1, the fan 28 is fixed at the lower end of the drive shaft 26 but the lower end of the drive shaft 26 may be formed as shown in Fig. 12 to serve as fan and sucking mouth. In this case, the lower end of the drive shaft 26 should be slightly separate from the inner bottom face of the pot proper 14a.

Next, another shutter will be explained.

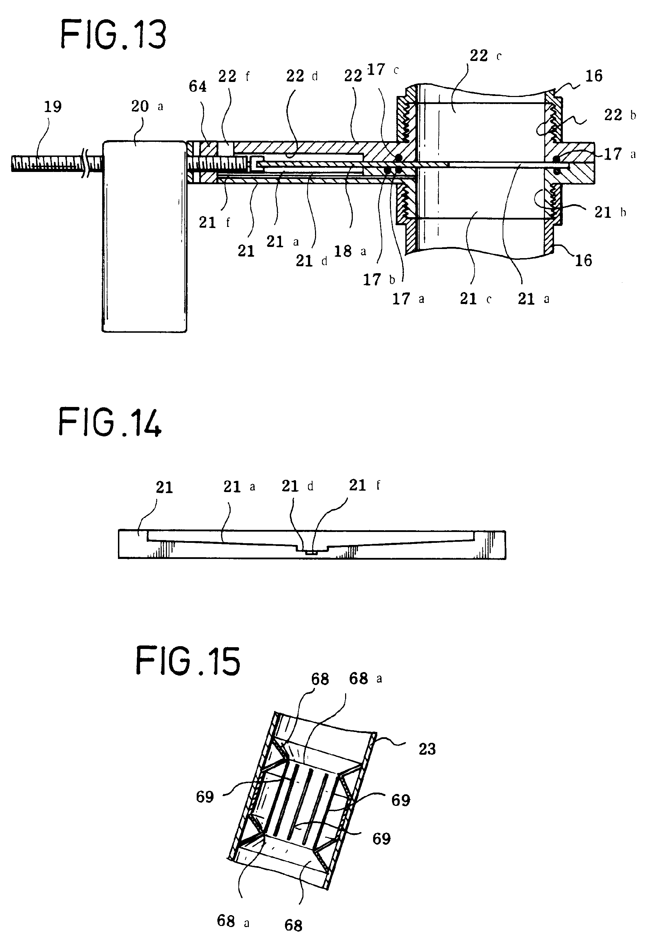

There may be grooved a shallow discharge groove 21f on the bottom face of the groove 21d of the cavity 21a of the clipping plate 21 clipping the shutter in order to discharge water leaked over the sealing member 17b. The discharge groove 21f is formed, as shown in Fig. 13, until the hole 21b via position below the sealing members 17a and 17b. With this structure, the water leaked will be discharged to the hole 21b via the discharge groove 21f. Note that, the discharge can be smooth if the carvity 21a is inclined toward the groove 21d.

In the former embodiment, the deodorizing section 23a has deodorizers therein. Electric heater may be used for deodorization. As shown in Fig. 15, a heat reflector 68 having lower and upper projections for reducing diameter of the smokestack 23 is attached to the mid section of the smokestack 23 and for reflecting heat from heaters 69.... The electric heaters 69... are spanned between tops of the lower and upper projections. The heaters 69... are rounded by a plate with through-holes with this structure, smoke climbing through the smokestack 23 can be completely combusted, so that no bad smell will be emitted.

In Fig. 1, single filtering apparatus 34 is provided to single incinerating pot 14. For example, a plurality of toilet stools are set in a hotel. In this case, a plurality of incinating pots 14 are provided to each of toilet stools 10 but single filtering apparatus 34 may be provided for a plurality of incinerating pots 14.

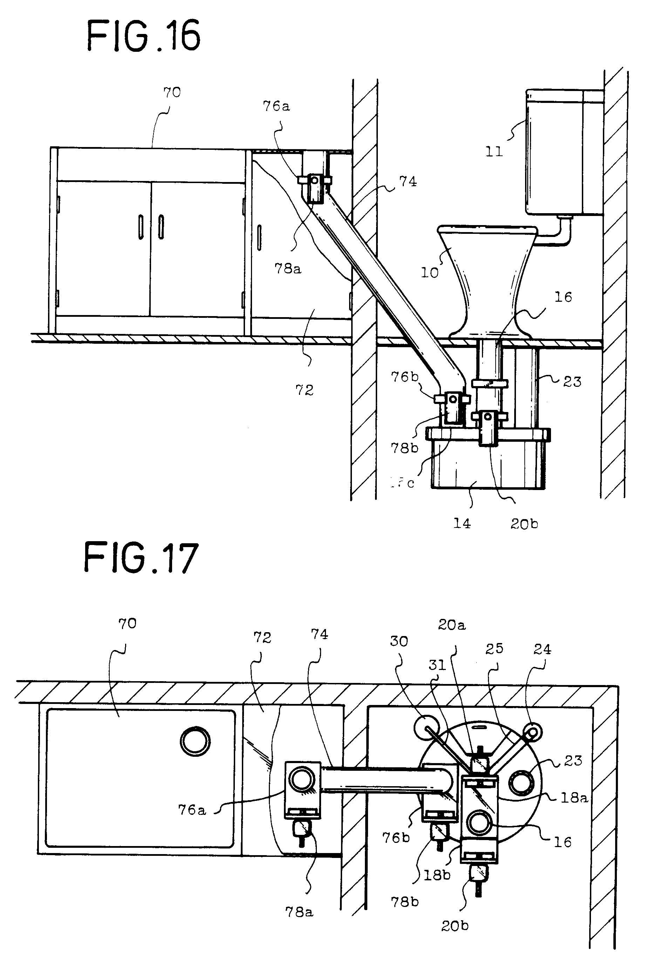

Next, another embodiment, which can incinate kitchen garbage with raw sewage, will be explained. Figs. 16 and 17 show a part of kitchen beside the toilet. A cupboard 72 is arranged beside a sink 70. An upper end of the pipe 74 is opened in the upper face of the cupboard 72; the lower end of the pipe 74 is connected to the third opening 15c of the incinerating pot 14. Two shutters 76a and 76b are provided at the midway of the pipe 74. The first shutter 76a and second shutter 76b are respectively driven by a first actuator 78a and a second actuator 78b to close and to open the pipe 74. Note that, the structure and interconnection of the shutters 76a and 76b and actuators 20a and 20b are the same as the structure and interconnection of the shutters 18a and 18b and the actuators 20a and 20b of the former embodiment.

When garbage is thrown into the incinerating pot 14, the first actuator 78a is operated to open the first shutter 76a. After garbage is thrown into the pipe 74, the first shutter 76a is closed and then the second shutter 76b is opened so as to introduce garbage onto the incinerating pot 14. Garbage can be incinerated with sewage in the incinerating pot 14. Note that, the incinerating pot 14 can incinerate only sewage, only garbage, or the both.

Preferred embodiments of the present invention have been described in detail, many modifications such as the structure of the filtering apparatus, shape or structure of the incinerating pot, or shutter mechanism, etc. can be allowed without deviating the spirit of the invention.

The each of flush toilet of the embodimetns has above described structure, so that it has following advantages.

Raw sewage can be easily directed to the incinerating pot because the incinerating pot is arranged under the toilet stool.

Raw sewage and flush water can be dealt separately because the shutters are provided in the midway of the drain pipe and the branch pipe is provided above the shutters.

During evacuation or urination, the first shutter opens, and after evacuation or urination, the first shutter closes and then the second shutter opens to fall raw sewage onto the incinerating pot. Additionally, flushing water can be flushed only the case that the first shutter is closed. Therefore, even if the first shutter opens during incineration, the second shutter prevents emitting heat or bad smell.

Moreover, water flushed may be filtered, so that the water filtered can be reused as flushing water. This method is effective and economical.

## Claims

1. A flush toilet, comprising:
an incinerating pot (14) for incinerating sewage or the like arranged below a toilet stool (10);
conduit means (16) connecting said incinerating pot (14) and said toilet stool (10);
a branch pipe (32) attached to said conduit means (16) in order to separate flushing water from the sewage;
and vertically spaced first and second valve means (18a, 18b) in said conduit means (16) below the branch pipe (32);
characterised in that said conduit means (16) is a drain pipe which extends vertically, directly from the toilet stool (10) to the incinerating pot (14), and said first and second valve means (18a,18b) are respective upper and lower shutters for opening/closing the pipe (16) at respective vertical locations; means (11a, 11b, 11c, 19, 20) being provided for actuating the shutters (18a, 18b) so that the flush toilet is switchable between:
(a) a 'use configuration' when the toilet is to be used, in which the upper shutter (18a) is open and the lower shutter (18b) is closed so that sewage falls onto the lower shutter (18b);
(b) a 'flush configuration' when the toilet is to be flushed, in which the upper shutter (18a) is closed and the lower shutter (18b) is opened so that accumulated sewage and water from the space between the shutters falls into the incinerating pot (14), while most of the flushing water exits through the branch pipe (32) above the upper shutter (18a); a quantity of flushing water being retained in the pipe (16) above the upper shutter and below the branch pipe (32); the retained water subsequently passing down the drain pipe (16) and being retained by the lower shutter when the toilet is switched to the use configuration.

2. A flush toilet according to claim 1 wherein said branch pipe (32) is connected to a filtering apparatus (34), and said toilet stool (10) and a tank (50c) for impounding water filtered by said filtering apparatus (34) are connected to each other by a return pipe (58).

3. A flush toilet according to claim 1 or 2 wherein the inner center part of said incinerating pot (14) is formed lower, and further comprising a fan (28,26) for agitating sewage, etc. in said incinerating pot (14) and means (26,29,31,30) for sucking ash, whose end (26) is arranged in said incinerating pot (14).

4. A flush toilet according to any one of the preceding claims, further comprising separate means (74, 15c) for introducting waste material other than sewage into said incinerating pot (14) whereby waste material can be incinerated with or without sewage.

## Patentansprüche

1. Spültoilette mit:
einem Veraschungstopf (14) zum Veraschen von Fäkalien oder ähnlichem, der unter einem Toilettenbecken (10) angeordnet ist; Leitungsmittel (16), das den Veraschungstopf (14) und das Toilettenbecken (10) miteinander verbindet;
einem Abzweigrohr (32), das an dem Leitungsmittel (16) angebracht ist zum Trennen von Spülwasser von den Fäkalien;
und in einem vertikalen Abstand voneinander angeordneten ersten und zweiten Ventilmittel (18a, 18b) in dem Leitungsmittel (16) unterhalb des Abzweigrohres (32);
dadurch gekennzeichnet, daß das Leitungsmittel (16) ein Abflußrohr ist, das sich senkrecht direkt von dem Toilettenbecken (10) zu dem Veraschungstopf (14) erstreckt, und daß das erste und zweite Ventilmittel (18a, 18b) ein entsprechender oberer und unterer Verschluß zum Öffnen/Schließen des Rohres (16) an entsprechenden vertikalen Stellen ist;
wobei Mittel (11a, 11b, llc, 19, 20) zum Betätigen der Verschlüsse (18a, 18b) so vorgesehen ist, daß die Spültoilette schaltbar ist zwischen:
(a) einer "Benutzungskonfiguration", wenn die Toilette benutzt werden soll, in der der obere Verschluß (18a) offen ist und der untere Verschluß (18b) geschlossen ist, so daß die Fäkalien auf den unteren Verschluß (18b) fallen;
(b) einer "Spülkonfiguration", wenn die Toilette gespült werden soll, in der der obere Verschluß (18a) geschlossen ist und der untere Verschluß (18b) geöffnet ist, so daß die angesammelten Fäkalien und Wasser von dem Raum zwischen den Verschlüssen in den Veraschungstopf (14) fallen, während das meiste Spülwasser durch das Abzweigrohr (32) oberhalb des oberen Verschlusses (18a) austritt;
wobei eine Menge des Spülwassers in dem Rohr (16) oberhalb des oberen Verschlusses und unterhalb des Abzweigrohres (32) zurückgehalten wird;
das zurückgehaltene Wasser darauffolgend durch das Abflußrohr (16) geht und von dem unteren Verschluß zurückgehalten wird, wenn die Toilette in die Benutzungskonfiguration geschaltet ist.

2. Spültoilette nach Anspruch 1, bei der das Abzweigrohr (32) mit einem Filtergerät (34) verbunden ist und das Toilettenbecken (10) und ein Tank (50c) zum Auftreffen von Wasser, das durch das Filtergerät (34) gefiltert ist, miteinander durch ein Rückführrohr (58) verbunden sind.

3. Spültoilette nach Anspruch 1 oder 2, bei der der innere mittlere Teil des Veraschungstopfes (14) niedriger gebildet ist und die weiter einen Ventilator (28, 26) zum Rühren von Fäkalien usw. in dem Veraschungstopf (14) und Mittel (26, 29, 31, 30) zum Ansaugen von Asche, dessen unteres Ende (26) in dem Veraschungstopf (14) angeordnet ist, aufweist.

4. Spültoilette nach einem der vorhergehenden Ansprüche, weiter mit Trennmittel (74, 15c) zum Einführen von Abfallmaterial außer Fäkalien in den Veraschungstopf (14), wobei das Abfallmaterial mit oder ohne Fäkalien verascht werden kann.

## Revendications

1. WC à chasse d'eau comprenant:
un pot d'incinération (14) pour incinérer les déchets de WC ou analogues, disposé au-dessous d'une cuvette (10) du WC;
des moyens à conduite (16) reliant ledit pot d'incinération (14) et ladite cuvette (10) du WC;
un tuyau de branchement (32) fixé auxdits moyens à conduite (16) pour séparer l'eau de lavage des déchets de WC; et
des premier et second moyens à soupape (18a, 18b) espacés verticalement dans lesdits moyens à conduite (16) au-dessous du tuyau de branchement (32),
caractérisé en ce que les moyens à conduite (16) sont constitués par un tuyau d'évacuation s'étendant verticalement, directement à partir de la cuvette (10) du WC vers le pot d'incinération (14), et lesdits premier et second moyens à soupape (18a, 18b) sont des volets supérieur et inférieur respectifs pour ouvrir/fermer le tuyau (16) à des emplacements verticaux respectifs (11a, 11b, 11c, 19, 20); des moyens étant prévus pour actionner les volets (18a, 18b) de manière que le WC à chasse d'eau puisse commuter entre
(a) une "configuration d'utilisation" quand le WC doit être utilisé, dans laquelle le volet supérieur (18a) est ouvert et le volet inférieur (18b) est fermé de manière que les déchets de WC tombent sur le volet inférieur (18b);
(b) une "configuration de lavage" quand le WC doit être nettoyé avec de l'eau, dans laquelle le volet supérieur (18a) est fermé et le volet inférieur (18b) est ouvert de manière que les déchets de WC accumulés et l'eau provenant de l'espace entre les volets tombent dans le pot d'incinération (14), alors que la plus grande partie de l'eau de lavage sort par le tuyau de branchement (32) au-dessus du volet supérieur (18a); une quantité d'eau de lavage étant retenue dans le tuyau (16) au-dessus du volet supérieur et au-dessous du tuyau de branchement (32); l'eau retenue passant ensuite dans le tuyau d' évacuation (16) et étant retenue par le volet inférieur quand le WC est commuté vers la configuration d'utilisation.

2. WC à chasse d'eau selon la revendication 1, dans lequel ledit tuyau de branchement (32) est relié à un dispositif de filtrage (34), et ladite cuvette (10) du WC et un réservoir (50c) prévu pour recevoir l'eau filtrée par ledit dispositif de filtrage (34) sont reliés l'un à l'autre par un tuyau de retour (58).

3. WC à chasse d'eau selon la revendication 1 ou 2, dans lequel la partie centrale interne dudit pot d'incinération (14) est formée à un niveau plus bas, et comprend en outre un ventilateur (28, 26) pour agiter les déchets du WC, etc. dans ledit pot d'incinération (14) et des moyens (26, 29, 31, 30) pour aspirer les cendres, dont l'extrémité (26) est disposée dans ledit pot d'incinération (14).

4. WC à chasse d'eau selon l'une quelconque des revendications précédentes, comprenant en outre des moyens séparés (74, 15c) pour introduire des détritus autres que les déchets du WC dans ledit pot d'incinération (14), lesdits détritus pouvant être incinérés avec ou sans les déchets du WC.
